# EUROPEAN PATENT APPLICATION

(11) **EP 2 858 333 A1**
(43) Date of publication of application: **08.04.2015**
(21) Application number: 13801124.2
(22) Date of filing: 10.01.2013
(51) Int. Cl.: H04M 1/02, G06F 1/16, H04R 1/00, H05K 5/02, H05K 7/12

(54) **MOBILE TERMINAL DEVICE**

(30) Priority: 05.06.2012 JP 2012128097
(71) Applicant: NEC CASIO Mobile Communications, Ltd., Kawasaki-shi, Kanagawa 211-8666 (JP)
(72) Inventor: SHIRAISHI, Mitsutaka, Kawasaki-shi Kanagawa 211-8666 (JP)
(74) Representative: Vossius & Partner
(86) International application number: PCT/JP2013/000050
(87) International publication number: WO 2013/183191

(57) **Abstract**

A portable terminal device according to the present invention includes: a display unit (10); a vibration element (50) that transmits a vibration to the display unit (10); and a housing (40) capable of accommodating the vibration element (50). A first member (51) is provided between the display unit (10) and the vibration element (50), and a vibration absorbing member (52) that is more likely to absorb a vibration than the first member (51) is provided between the housing (40) and the vibration element (50). This configuration allows the vibration of the vibration element (50) to be transmitted preferentially to the display unit (10) and improves transmission characteristics of the vibration from the vibration element (50) to the display unit (10).

## Description

### Technical Field

The present invention relates to a portable terminal device, and more particularly, to a portable terminal device that uses a thin planar housing.

### Background Art

In recent years, portable terminal devices in which a display unit is provided with a touch panel have been in widespread use. Such portable terminal devices employ a user interface that enables a user to operate the portable terminal device by touching an icon or the like displayed on the display unit.

Patent Literature 1 discloses a technique in which vibration of a touch panel and vibration of a vibrator are achieved cost effectively without increasing a mounting area. Patent Literature 2 discloses a technique for providing a waterproof structure and electronic equipment capable of reducing the number of components, making the structure simple and thin, and capable of bringing about high resistance to water. Patent Literature 3 discloses a technique related to a portable terminal device capable of drastically improving sound quality in a panel speaker structure while preventing a protecting panel from dropping off caused by impact such as a fall. Patent Literature 4 discloses a technique in which a device, such as a portable telephone, has a display screen provided with functions of a microphone and a speaker so that the front face of the device can be used widely as the display screen.

### Citation List

### Patent Literature

[Patent Literature 1] Japanese Unexamined Patent Application Publication No. 2008-17327
[Patent Literature 2] Japanese Unexamined Patent Application Publication No. 2009-105610
[Patent Literature 3] Japanese Unexamined Patent Application Publication No. 2006-352762
[Patent Literature 4] International Patent Publication No. WO 2002/021881

### Summary of Invention

### Technical Problem

An interface that uses a touch panel enables a user to operate a portable terminal device by touching a display unit provided with a touch panel. In such an interface, the display unit is caused to vibrate by a vibration element to notify the user of the operation status during the operation by the user, for example, thereby improving the operability. However, in order to allow the user to clearly recognize the vibration of the display unit, it is necessary to improve the transmission characteristics of the vibration from the vibration element to the display unit.

In view of the above-mentioned problem, an object of the present invention is to provide a portable terminal device capable of improving the transmission characteristics of vibration to the display unit.

### Solution to Problem

A portable terminal device according to the present invention includes: a display unit; a vibration element that transmits a vibration to the display unit; and a housing capable of accommodating the vibration element. A first member is provided between the display unit and the vibration element, and a vibration absorbing member that is more likely to absorb a vibration than the first member is provided between the housing and the vibration element.

### Advantageous Effects of Invention

According to the present invention, it is possible to provide a portable terminal device capable of improving the transmission characteristics of vibration to a display unit.

### Brief Description of Drawings

Fig. 1 is an exploded perspective view showing an example of a portable terminal device according to an exemplary embodiment;
Fig. 2 is a sectional view taken along a cutting-plane line II-II of the portable terminal device shown in Fig. 1;
Fig. 3 is a sectional view taken along the cutting-plane line II-II of the portable terminal device shown in Fig. 1;
Fig. 4 is a sectional view showing another example of the portable terminal device according to an exemplary embodiment;
Fig. 5 is a sectional view taken along a cutting-plane line IV-IV of the portable terminal device shown in Fig. 1;
Fig. 6 is a top view showing a state in which a frame is mounted on a housing of the portable terminal device according to an exemplary embodiment;
Fig. 7 is a top view showing a state in which the frame and a fixing member are mounted on the housing of the portable terminal device according to an exemplary embodiment; and
Fig. 8 is a top view showing a state in which a display unit is mounted on the housing of the portable terminal device according to an exemplary embodiment.

### Description of Embodiments

An exemplary embodiment of the present invention will be described below with reference to the drawings.

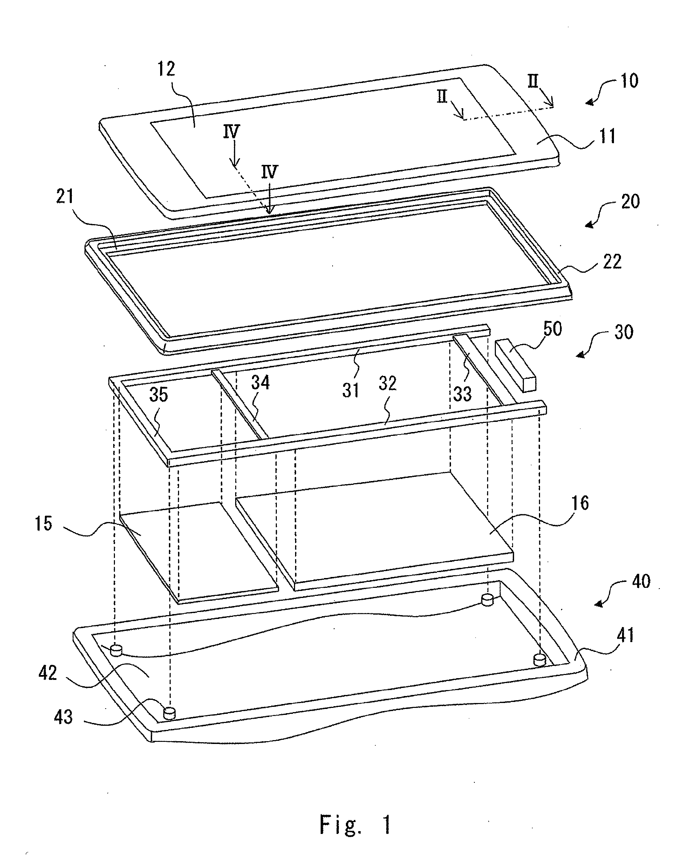

Fig. 1 is an exploded perspective view showing an example of a portable terminal device according to this exemplary embodiment. In the portable terminal device according to this exemplary embodiment, a substrate 15, a battery 16, a frame 30, and a vibration element 50 are accommodated in a space formed by joining a housing 40 and a display unit 10 together with a fixing member 20 interposed therebetween. The portable terminal device according to this exemplary embodiment is, for example, a smartphone, a tablet portable terminal device, a cellular phone, a game console, or an electronic book terminal.

The substrate 15 and the battery 16 are fixed to the frame 30 with screws or the like. For example, the substrate 15 and the battery 16 are fixed to the frame 30 from the side of the housing 40. The frame 30 to which the substrate 15 and the battery 16 are fixed is fixed to mounting portions 43, which are formed at corners of a recessed portion 42 of the housing 40, with screws or the like. The frame 30 includes frame members 31 and 32 (first and second frame members) each extending in the longitudinal direction of the housing 40, and a plurality of beam members 33, 34, and 35 which extend in a direction intersecting with the longitudinal direction of the housing 40 and which are connected to each of the frame members 31 and 32.

The frame 30 is a member that holds the substrate 15 and the battery 16, and thus requires a certain degree of strength. For this reason, the frame 30 is preferably formed using a metallic material. Examples of the material used for the frame 30 include a magnesium alloy, aluminum, and stainless steel. In view of weight saving of the portable terminal device, it is preferable to use a magnesium alloy. If a sufficient strength can be secured, the frame 30 may be formed using a resin material.

Circuit elements are provided on the substrate 15. Examples of the circuit elements include a processor that drives the portable terminal device, a memory, an integrated circuit device, such as a communication module, and an image pickup device for a camera. The battery 16 is, for example, a lithium ion secondary battery.

The housing 40 includes the recessed portion 42 that can accommodate predetermined members (the frame 30, the substrate 15, the battery 16, the vibration element 50, and the like), and a side wall 41 which is formed around the recessed portion 42. The back surface of the housing 40 shown in Fig. 1 is formed in a curved shape so as to fit the hand of a user. However, the back surface of the housing 40 may be formed in a flat shape.

In order to secure the strength of the portable terminal device, it is preferable that the housing 40 be formed of a material having a high rigidity. For example, the housing 40 can be formed using a carbon composite material (Carbon Fiber Reinforced Plastics (CFRP)). The carbon composite material is a composite material containing not less than 50% by volume of carbon and also containing an inorganic binder such as silica or alumina, fiber, and the like. The carbon composite material has high strength and is lightweight. The housing 40 may be formed using a metallic material such as aluminum, an aluminum alloy, or a magnesium alloy.

The fixing member 20 is provided between the side wall 41 of the housing 40 and the bottom surface and side surface of the display unit 10. The fixing member 20 is formed in a frame shape at a location corresponding to the side wall 41 of the housing 40. The fixing member 20 is formed of a soft material, that is, a material having a low rigidity. For example, the fixing member 20 can be formed using a resin material. In this case, the rigidity of the fixing member 20 is lower than the rigidity of each of the display unit 10 and the housing 40.

The display unit 10 includes a touch panel 11 and a display panel 12. The touch panel 11 protects the display panel 12 from the external environment, and detects a position touched by the user on a screen. The display panel 12 is bonded to the touch panel 11 with an adhesive, a double-sided tape, or the like. The display panel 12 is, for example, a liquid crystal panel, an organic EL (Electro Luminescence) panel, or the like. The display unit 10 (touch panel 11) is mounted on a mounting surface 21 of the fixing member 20 on the inside of a projecting portion 22 of the fixing member 20.

The vibration element 50 is an element that transmits a vibration to the display unit 10 and is provided at an end in the longitudinal direction of the portable terminal device. The vibration element 50 is electrically connected to the substrate 15 with a wire or the like. For example, a piezoelectric element can be used as the vibration element 50.

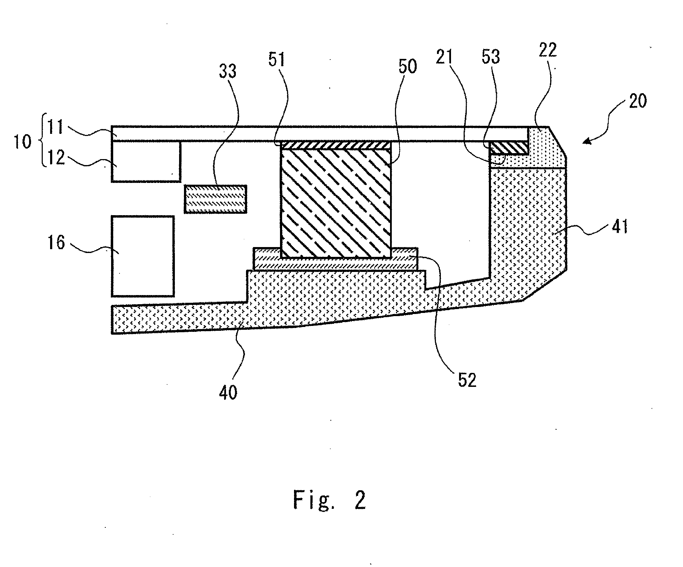

Fig. 2 is a sectional view taken along a cutting-plane line II-II of the portable terminal device shown in Fig. 1. The sectional view shows a portion in which the vibration element 50 is provided. As shown in Fig. 2, the vibration element 50 is provided between the display unit 10 (specifically, the touch panel 11) and the housing 40. A member 51 (first member) is provided between the touch panel 11 and the vibration element 50. A vibration absorbing member 52 that is more likely to absorb a vibration than the member 51 is provided between the housing 40 and the vibration element 50.

That is, in the portable terminal device according to this exemplary embodiment, the member 51 is provided between the touch panel 11 and the vibration element 50, and the vibration absorbing member 52 that is more likely to absorb a vibration than the member 51 is provided between the housing 40 and the vibration element 50. This configuration makes the vibration of the vibration element 50 less likely to be transmitted to the housing 40. This results in allowing the vibration of the vibration element 50 to be more easily transmitted to the touch panel 11. Therefore, the vibration of the vibration element 50 can be transmitted preferentially to the touch panel 11, and thus the transmission characteristics of the vibration from the vibration element 50 to the touch panel 11 can be improved.

The member 51 may be a member having no adhesion properties, or may be a member having adhesion properties (i.e., an adhesive member). When an adhesive member (first adhesive member) is used as the member 51, the vibration element 50 is bonded to the touch panel 11. For example, a hard, thin adhesive member, such as a thin double-sided tape having a film base material (for example, a PET base material), or a thin double-sided tape having no base material, can be used as the adhesive member 51. For example, a gel-like material mainly made of urethane foam, foaming gel, and silicone can be used as the vibration absorbing member 52. In the case where the member 51 has no adhesion properties, the vibration element 50 can be fixed by being sandwiched between the touch panel 11 and the housing 40 when the display unit 10 is mounted on the housing 40.

In the portable terminal device according to this exemplary embodiment, when the touch panel 11 is bonded to the mounting surface 21 of the fixing member 20, an adhesive member 53 (third adhesive member) that is more likely to absorb a vibration than the adhesive member 51 may also be used. For example, a thick, flexible adhesive material, such as a double-sided tape having a foam base material, or a thick double-sided tape having no base material, can be used as the adhesive member 53. That is, the adhesive member 53 that is more likely to absorb a vibration than the adhesive member 51 is used to bond the touch panel 11 and the fixing member 20 together, thereby making it possible to suppress the transmission of the vibration of the touch panel 11 to the fixing member 20, and to suppress the attenuation of the vibration of the touch panel 11. This makes it possible to transmit fine vibrations to the fingers of the user through the touch panel 11.

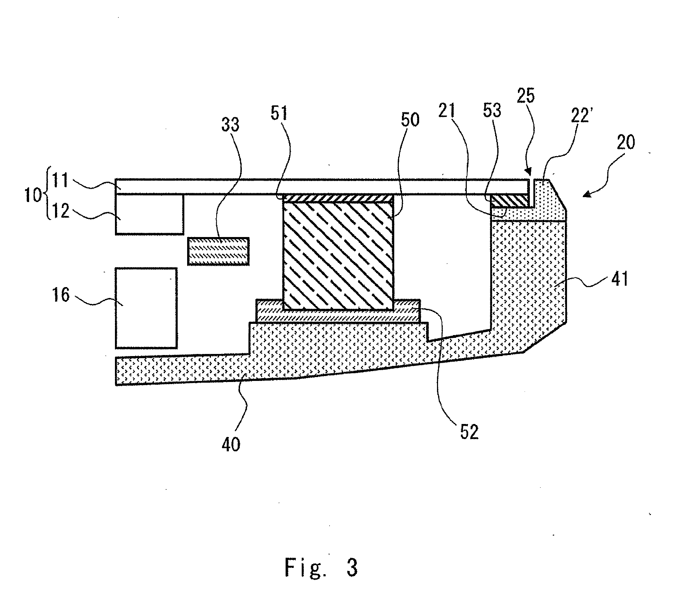

Since the touch panel 11 is mounted on the inside of the projecting portion 22 of the fixing member 20, a slight gap 25 may be formed between the touch panel 11 and a projecting portion 22' as shown in Fig. 3. The formation of the gap 25 between the touch panel 11 and the projecting portion 22' makes it possible to suppress the transmission of the vibration of the touch panel 11 to the projecting portion 22'.

An example in which a hard, thin adhesive member is used as the adhesive member 51 and a thick, flexible adhesive member is used as the adhesive member 53 has been described above. However, the adhesive members 51 and 53 may be formed with the same thickness. Further, a material that is less likely to absorb a vibration may be used as the adhesive member 51, and a material that is more likely to absorb a vibration may be used as the adhesive member 53. Furthermore, the adhesive member 51 and the adhesive member 53 may be connected to each other. In this case, the area of the adhesive member 51 that allows the touch panel 11 and the vibration element 50 to be bonded together may be increased, and the area of the adhesive member 53 that allows the touch panel 11 and the fixing member 20 to be bonded together may be decreased. Thus, the increase in the area of the adhesive member 51 makes the vibration of the vibration element 50 more likely to be transmitted to the touch panel 11, and the decrease in the area of the adhesive member 53 makes it possible to suppress the transmission of the vibration of the touch panel 11 to the fixing member 20. The adhesive members can be integrated by connecting the adhesive member 51 and the adhesive member 53 together. This leads to an improvement in the productivity of the portable terminal device.

In the portable terminal device according to this exemplary embodiment, the fixing member 20 is provided between the touch panel 11 and the housing 40. A material having a rigidity lower than the rigidity of each of the touch panel 11 and the housing 40 can be used for the fixing member 20. For example, general-purpose engineering plastics such as polycarbonate, and a resin material such as thermoplastic elastomer can be used. In this manner, the formation of the fixing member 20, which is formed of a flexible material, between the touch panel 11 and the housing 40 makes it possible to suppress the transmission of the vibration of the touch panel 11 to the housing 40, and to suppress the attenuation of the vibration of the touch panel 11.

Furthermore, the formation of the fixing member 20 between the touch panel 11 and the housing 40 makes it possible to absorb an impact to be applied to the housing 40, for example, when the portable terminal device is dropped, by using the fixing member 20 having a low rigidity, and also makes it possible to suppress the impact applied to the housing 40 from being transmitted to the touch panel 11. Also, in the case where an impact is applied to the touch panel 11, for example, when the portable terminal device is dropped, this impact can be absorbed by using the fixing member 20 having a low rigidity, and the transmission of the impact applied to the touch panel 11 to the housing 40 can be suppressed. Consequently, the impact resistance of the portable terminal device can be improved.

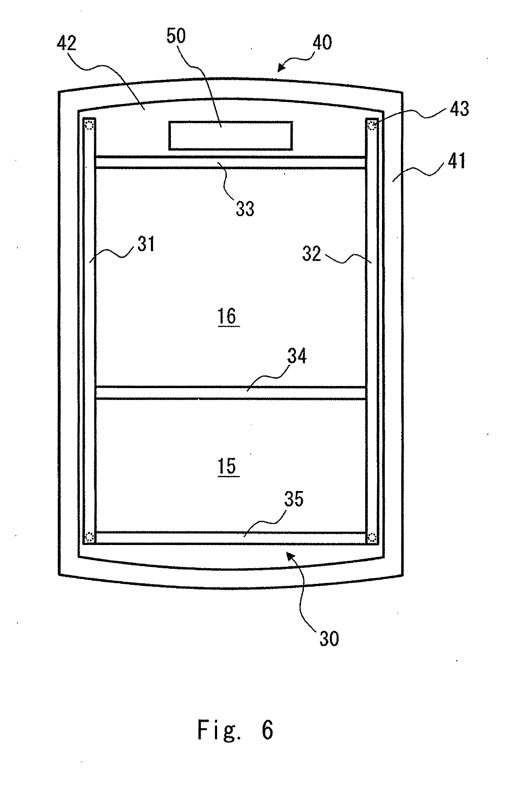

In the portable terminal device according to this exemplary embodiment, a gap is formed around the vibration element 50 (i.e., around an area other than the area that is in contact with the touch panel 11 and the housing 40). In other words, the vibration element 50 is provided at a location spaced apart from the frame 30 and the side wall 41 at an end in the longitudinal direction of the housing 40. Specifically, the vibration element 50 is disposed so as to be surrounded by the side wall 41 at an end in the longitudinal direction of the housing 40, the frame members 31 and 32, and the beam member 33 that is disposed at a location closest to the vibration element 50 among the plurality of beam members 33, 34, and 35 (see Fig. 6). Accordingly, the transmission of the vibration of the vibration element 50 to the frame 30 and the side wall 41 of the housing 40 can be suppressed. Moreover, when the portable terminal device is dropped, damage to the vibration element 50 can be suppressed.

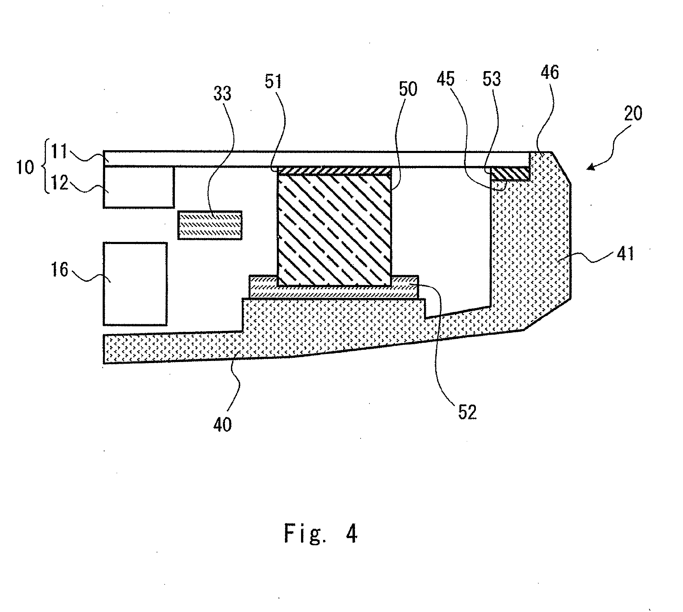

The portable terminal device according to this exemplary embodiment may be configured without the fixing member 20 as shown in Fig. 4. In this case, a mounting surface 45 and a projecting portion 46 are formed on the side wall 41 of the housing 40. The touch panel 11 is mounted on the mounting surface 45 on the inside of the projecting portion 46. In this case, the touch panel 11 and the housing 40 are bonded together with the adhesive member 53 (second adhesive member) that is more likely to absorb a vibration than the adhesive member 51. That is, the adhesive member 53 that is more likely to absorb a vibration than the adhesive member 51 is used to bond the touch panel 11 and the housing 40 together, thereby making it possible to suppress the transmission of the vibration of the touch panel 11 to the housing 40, and to suppress the attenuation of the vibration of the touch panel 11.

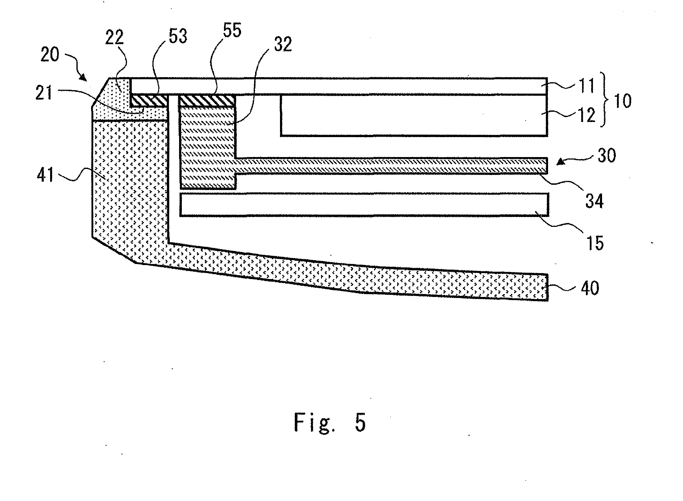

Fig. 5 is a sectional view taken along a cutting-plane line IV-IV of the portable terminal device shown in Fig. 1. As shown in Fig. 5, in the portable terminal device according to this exemplary embodiment, the frame member 32 and the touch panel 11 may be bonded together with an adhesive member 55 (fourth adhesive member) that is more likely to absorb a vibration than the adhesive member 51. The same holds true for the frame member 31. With this configuration, the gap between the frame members 31 and 32 and the touch panel 11 can be narrowed, and the thickness of the portable terminal device can be reduced. In other words, if the adhesive member 55 is not provided between the touch panel 11 and the frame members 31 and 32, the touch panel 11 and the frame members 31 and 32 may be brought into contact with each other due to deformation of the touch panel 11 and the frame members 31 and 32. In order to prevent this, it is necessary to form a certain degree of gap between the touch panel 11 and the frame members 31 and 32. Accordingly, the thickness of the portable terminal device is increased by the amount corresponding to the gap. On the other hand, when the frame member 32 and the touch panel 11 are bonded together with the adhesive member 55, the adhesive member 55 functions as a cushion, so that the distance between the touch panel 11 and the frame members 31 and 32 can be reduced. Therefore, the thickness of the portable terminal device can be reduced.

Fig. 6 is a top view showing a state in which the frame 30 is mounted on the housing 40 of the portable terminal device according to this exemplary embodiment. As shown in Fig. 6, the frame 30 to which the substrate 15 and the battery 16 are fixed is fixed to the mounting portions 43, which are formed at corners of the recessed portion 42 of the housing 40, with screws or the like. The frame 30 includes the frame members 31 and 32 and the beam members 33, 34, and 35 which connect the frame members 31 and 32 to each other. The frame members 31 and 32 and the beam member 35 are preferably formed of a thick material to keep the strength of the frame 30. Since the display panel 12 is disposed at a location where the beam member 34 is provided as shown in Fig. 5, the beam member 34 is preferably formed of a thin material to prevent interference with the display panel 12.

The beam member 33 that is disposed at a location closest to the vibration element 50 is preferably formed in such a manner that the beam member 33 and the touch panel 11 are prevented from contacting each other. That is, in the case where the beam member 33 is formed of a thick material and the beam member 33 and the touch panel 11 are bonded together with an adhesive member, the vibration of the vibration element 50 is absorbed by the adhesive member formed on the beam member 33. In this case, as shown in Fig. 6, the beam member 33 is provided between a central portion of the touch panel 11 and the vibration element 50. Accordingly, when the beam member 33 is brought into contact with the touch panel 11, the vibration transmitted from the vibration element 50 to the central portion of the touch panel 11 is absorbed, which deteriorates the transmission characteristics of the vibration from the vibration element 50 to the touch panel 11. For this reason, it is preferable that the touch panel 11 and the beam member 33 that is disposed at a location closest to the vibration element 50 among the plurality of beam members 33, 34, and 35 be disposed at a predetermined distance from each other.

The substrate 15 is preferably disposed at a location farther from the vibration element 50 than the battery 16. That is, the substrate 15 and the vibration element 50 are disposed so as to be spaced apart from each other, thereby suppressing the effect of noise, which is generated from the vibration element 50, on the circuit elements mounted on the substrate.

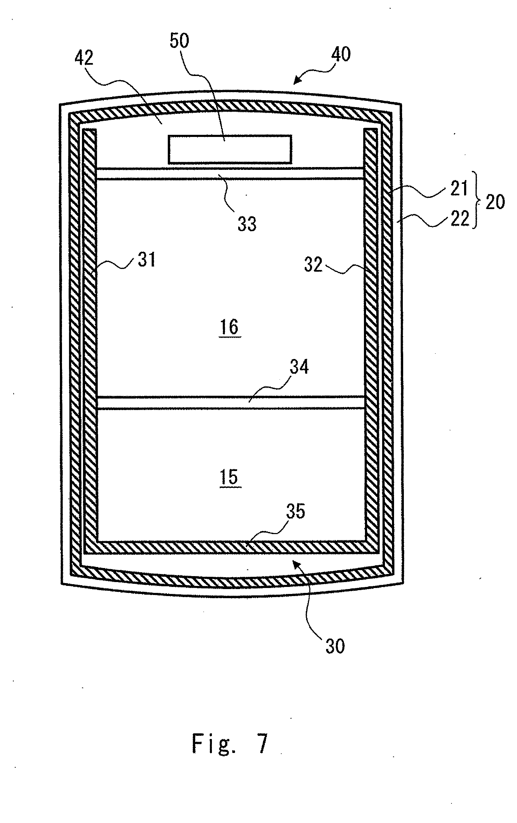

Fig. 7 is a top view showing a state in which the frame 30 and the fixing member 20 are mounted on the housing 40 of the portable terminal device according to this exemplary embodiment. As shown in Fig. 7, the mounting surface 21 of the fixing member 20 and the top surfaces of the frame members 31 and 32 and the beam member 35 (as indicated by hatched areas) are portions to be bonded to the touch panel 11. That is, since the frame members 31 and 32 and the beam member 35 are disposed in the vicinity of the periphery of the touch panel 11, the frame members 31 and 32 and the beam member 35 have little effect on the transmission characteristics of the vibration from the vibration element 50 to the touch panel 11, even when the frame members 31 and 32 and the beam member 35 are bonded to the touch panel 11. In this case, the beam member 35 is a beam member that is disposed at a location farthest from the vibration element 50 among the plurality of beam members 33, 34, and 35.

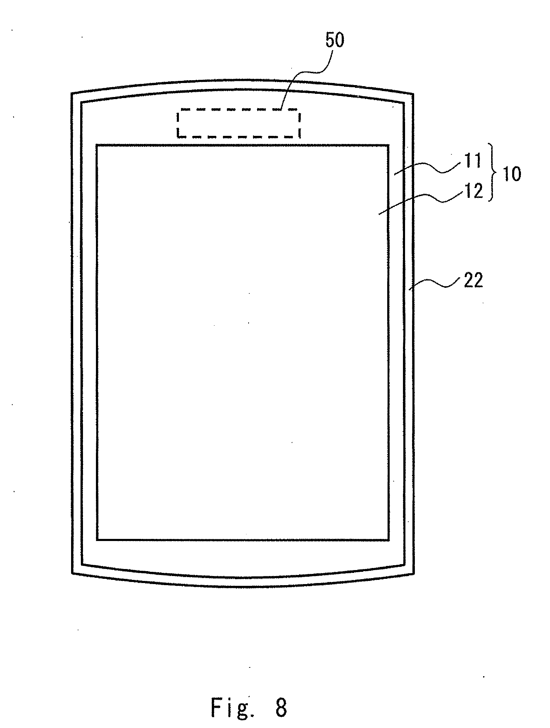

Fig. 8 is a top view showing a state in which the display unit 10 is mounted on the housing 40 of the portable terminal device according to this exemplary embodiment. The display unit 10 is mounted on the inside of the projecting portion 22 of the fixing member 20, by using the mounting surface 21 of the fixing member 20, the top surfaces of the frame members 31 and 32 and the beam member 35, and the adhesive members 53 and 55 (see Fig. 5). In this case, as shown in Fig. 8, the display unit 10 is surrounded by the projecting portion 22 of the fixing member 20.

Note that the adhesive member 53 and the adhesive member 55 may be formed of one adhesive member. Since the adhesive member 53 and the adhesive member 55 are each formed of a thick, flexible adhesive member, the adhesive member 53 and the adhesive member 55 can be formed of the same adhesive member. This leads to an improvement in the productivity of the portable terminal device.

In recent years, portable terminal devices in which a display unit is provided with a touch panel have been in widespread use. An interface that uses a touch panel enables a user to operate a portable terminal device by touching the display unit provided with the touch panel. In such an interface, the display unit is caused to vibrate by the vibration element to notify the user of the operation status during the operation by the user, for example, thereby improving the operability. Especially, in the recent portable terminal devices, the display unit has a large screen, and a user interface that uses a touch panel is used in many cases. Accordingly, the role of the vibration element has been shifted from an element that causes the housing to vibrate to notify the user of an incoming call, to an element that causes the touch panel to vibrate to notify the user of the operation status. Therefore, in order to allow the user to clearly recognize the vibration of the display unit, it is necessary to improve the transmission characteristics of the vibration from the vibration element to the display unit.

In this regard, in the portable terminal device according to this exemplary embodiment, the member 51 is provided between the display unit 10 (touch panel 11) and the vibration element 50, and the vibration absorbing member 52 that is more likely to absorb a vibration than the member 51 is provided between the housing 40 and the vibration element 50. This configuration makes the vibration of the vibration element 50 less likely to be transmitted to the housing 40. This results in allowing the vibration of the vibration element 50 to be more easily transmitted to the touch panel 11. Consequently, the vibration of the vibration element 50 can be transmitted preferentially to the touch panel 11, and the transmission characteristics of the vibration from the vibration element 50 to the touch panel 11 can be improved.

In the portable terminal device according to this exemplary embodiment, the adhesive member 53 that is more likely to absorb a vibration than the adhesive member 51 may be used to bond the touch panel 11 to the fixing member 20 (the housing 40 in the case of Fig. 4). This makes it possible to suppress the transmission of the vibration of the touch panel 11 to the fixing member 20 (the housing 40 in the case of Fig. 4), and to suppress the attenuation of the vibration of the touch panel 11.

Furthermore, in the portable terminal device according to this exemplary embodiment, the formation of the fixing member 20 between the display unit 10 (touch panel 11) and the housing 40 makes it possible to absorb an impact to be applied to the housing 40, for example, when the portable terminal device is dropped, by using the fixing member 20 having a low rigidity, and also makes it possible to suppress the impact applied to the housing 40 from being transmitted to the touch panel 11. Also, in the case where an impact is applied to the touch panel 11, for example, when the portable terminal device is dropped, this impact can be absorbed by using the fixing member 20 having a low rigidity, and the transmission of the impact applied to the touch panel 11 to the housing 40 can be suppressed. Consequently, the impact resistance of the portable terminal device can be improved.

The invention according to an exemplary embodiment described above can provide a portable terminal device capable of improving the transmission characteristics of the vibration to the display unit.

While the present invention has been described above with reference to exemplary embodiments, the present invention is not limited to the above exemplary embodiments. The configuration and details of the present invention can be modified in various manners which can be understood by those skilled in the art within the scope of the invention.

This application is based upon and claims the benefit of priority from Japanese patent application No. 2012-128097, filed on June 5, 2012, the disclosure of which is incorporated herein in its entirety by reference.

### Reference Signs List

- 10: DISPLAY UNIT
- 11: TOUCH PANEL
- 12: DISPLAY PANEL
- 15: SUBSTRATE
- 16: BATTERY
- 20: FIXING MEMBER
- 21: MOUNTING SURFACE
- 22: PROJECTING PORTION
- 30: FRAME
- 31, 32: FRAME MEMBER
- 33, 34, 35: BEAM MEMBER
- 40: HOUSING
- 41: SIDE WALL
- 42: RECESSED PORTION
- 43: MOUNTING PORTION
- 50: VIBRATION ELEMENT
- 51, 53, 55: ADHESIVE MEMBER
- 52: VIBRATION ABSORBING MEMBER

## Claims

1. A portable terminal device comprising:
a display unit;
a vibration element that transmits a vibration to the display unit; and
a housing capable of accommodating the vibration element, wherein
a first member is provided between the display unit and the vibration element, and
a vibration absorbing member is provided between the housing and the vibration element, the vibration absorbing member being more likely to absorb a vibration than the first member.

2. The portable terminal device according to Claim 1, wherein the first member is a first adhesive member, and the display unit and the vibration element are bonded together with the first adhesive member.

3. The portable terminal device according to Claim 1 or 2, wherein the display unit and the housing are bonded together with a second adhesive member that is more likely to absorb a vibration than the first member.

4. The portable terminal device according to Claim 1 or 2, wherein
a fixing member having a rigidity lower than that of the display unit and the housing is provided between the display unit and the housing, and
the display unit and the fixing member are bonded together with a third adhesive member that is more likely to absorb a vibration than the first member.

5. The portable terminal device according to any one of Claims 1 to 4, wherein the vibration element is provided at an end in a longitudinal direction of the housing.

6. The portable terminal device according to any one of Claims 1 to 5, further comprising a frame including: first and second frame members extending in a longitudinal direction of the housing; and a plurality of beam members extending in a direction intersecting with the longitudinal direction of the housing and being connected to each of the first and second frame members,
wherein the vibration element is provided at a location spaced apart from the frame and a side wall of the end in the longitudinal direction of the housing.

7. The portable terminal device according to Claim 6, wherein the vibration element is disposed so as to be surrounded by the side wall of the end in the longitudinal direction of the housing, the first and second frame members, and a beam member disposed at a location closest to the vibration element among the plurality of beam members.

8. The portable terminal device according to Claim 6 or 7, wherein the first and second frame members and the display unit are bonded together with a fourth adhesive member that is more likely to absorb a vibration than the first member.

9. The portable terminal device according to Claim 8, wherein the display unit and a beam member disposed at a location farthest from the vibration element among the plurality of beam members are bonded together with the fourth adhesive member.

10. The portable terminal device according to any one of Claims 6 to 9, wherein the display unit and a beam member disposed at a location closest to the vibration element among the plurality of beam members are disposed at a predetermined distance from each other.

11. The portable terminal device according to any one of Claims 6 to 10, wherein a substrate and a battery are fixed to the frame, and the substrate is fixed at a location farther from the vibration element than the battery.

12. The portable terminal device according to any one of Claims 2 to 11, wherein
the first adhesive member is a double-sided tape including a film base material, and
the second adhesive member is a double-sided tape including a foam base material.
